# EUROPÄISCHE PATENTSCHRIFT

(11) **EP 2 549 047 B1**
(45) Veröffentlichungstag und Bekanntmachung des Hinweises auf die Patenterteilung: **21.08.2019**
(21) Anmeldenummer: 12188150.2
(22) Anmeldetag: 13.03.2004
(51) Int. Cl.: E06B 3/667, E06B 3/677, E06B 3/663, B01D 53/28, B01J 20/16, B01D 53/26

(54) **ABSTANDHALTERPROFIL FÜR ISOLIERGLASSCHEIBEN**
SEPARATOR PROFILE FOR INSULATING GLASS PANES
PROFIL DE RETENUE D'ÉCARTEMENT POUR VITRES ISOLANTES

(30) Priorität: 14.03.2003 DE 10311830
(43) Veröffentlichungstag der Anmeldung: 23.01.2013
(62) Teilanmeldung aus: 04720534.9
(73) Patentinhaber: Ensinger GmbH, 71154 Nufringen (DE)
(72) Erfinder: ENSINGER, Wilfried, 71154 Nufringen (DE)
(74) Vertreter: Hoeger, Stellrecht & Partner Patentanwälte mbB

(56) Entgegenhaltungen:
- EP-A1- 0 198 419
- EP-A2- 0 261 923
- FR-A1- 2 265 964
- FR-A1- 2 379 691
- FR-A5- 2 095 741
- US-A- 4 215 164
- US-A- 4 431 691
- US-A- 5 855 972
- US-A- 5 879 764
- US-A- 6 001 453
- US-B1- 6 491 992

## Beschreibung

Die vorliegende Erfindung betrifft ein Abstandhalterprofil für Isolierglasscheiben, Wandpaneele oder dergleichen. Solche Abstandhalter weisen einen von einer Rechteckform abgeleiteten Profilquerschnitt auf, wobei bei der Bildung der Isolierglasscheiben zwei zueinander parallel beabstandete Seitenwandungen des Profils an den auf Abstand zu haltenden Glasscheiben anliegen, wobei eine erste und eine zweite, sich zwischen den Seitenwandungen ersteckende Querwand vorhanden sind, wobei die erste Querwand benachbart zum Scheibenrand und die zweite Querwand zum Scheibenzwischenraum hin angeordnet ist. In Verbindung mit Dichtstoffen wird der zwischen den Glasscheiben gebildete Scheibenzwischenraum zum Scheibenrand hin abgedichtet und mittels Trockenmittel trocken und damit beschlagfrei gehalten.

Abstandhalterprofile werden häufig in Form von Hohlprofilen aus Metall (rostfreier Stahl oder Aluminium) eingesetzt. Das Profil weist dabei zwei parallele Seitenwände, an denen die Scheiben anliegen und zwei sich zwischen den Seitenwänden erstreckende Querwände in Form von Schenkeln auf, welche im Wesentlichen quer zu den Seitenwänden des Hohlprofils verlaufen und diese miteinander verbinden.

Hinsichtlich ihrer Verbundfestigkeit zu den üblicherweise verwendeten Dichtstoffen und der Wasserdampfdichtigkeit gegenüber von außen in den Scheibenzwischenraum eindringendem Wasserdampf entsprechen sie den Anforderungen, jedoch ist der Wärmefluss im Randbereich der Scheiben, bedingt durch die metallischen Werkstoffe, zu groß. Selbst wenn der Scheibenzwischenraum mit Edelgasen, wie z.B. Xenon oder Krypton gefüllt ist, wird ein gravierender Abfall des Isolationswertes, speziell im Randbereich beobachtet.

Eine Verbesserung hinsichtlich der Wärmedämmung im Randbereich der Isolierglasscheiben brachten die Vorschläge der DE-A-33 02 659, DE-A-127 739, EP-A-0 430 889, EP-A-0 601 488, DE-A-198 05 348, DE-U-298 147 68 und DE-A-198 07 454, die anstelle von metallischen Werkstoffen Kunststoff verwenden und zum Teil in den Seitenwänden und Schenkeln metallische Dampfsperrfolien oder metallische Verstärkungselemente verwenden und in den Kunststoff einbetten.

Wie bei den Abstandhalterprofilen aus Metall müssen auch die Abstandhalterprofile aus Kunststoff beim Bilden eines Abstandhaltermetallrahmens noch mit den notwendigen Trockenmitteln befüllt werden, um die Beschlagneigung der Isolierglasscheiben zurückzudrängen.

Je nach Luftfeuchtigkeit bei den Füllbedingungen nehmen die Trocknungsmittel beim Füllvorgang der Abstandhalterrahmen mehr oder minder große Anteile an Wasserdampf aus der Fertigungsumgebung auf und gelangen so in der letztendlich dann versiegelt verschlossenen Isolierglasscheibe nur noch mit einem Teil ihrer Wasserdampfbindekapazität zum Einsatz, um den Scheibenzwischenraum zu trocknen bzw. trocken zu halten.

Aus der US-A-5 879 764 sind Polymer-gebundene Adsorbens-Beads bekannt, die Lehm-gebunde Beads ersetzen sollen, mit denen Hohlräume von Abstandhaltern bestückt werden können.

Aus der FR-A-2 379 691 sind bandförmige Abstandhalter bekannt. An den Abstandhaltern haften Bänder, die ein Trocknungsmittel umfassen. Das Trocknungsmittel umfasst ein Molekularsieb.

Aus der US-B-6 491 992 ist eine thermoplastische Elastomerzusammensetzung bekannt, die zur Herstellung von Abstandhaltern verwendet werden kann. Die Elastomerzusammensetzung kann Feuchtigkeitsabsorbens umfassen.

Aus der EP-A-0 198 419 sind Abstandhalter- und Abdichtungsanordnungen bekannt, die ein äußeres Element mit der Funktion eines Abstandhalters umfassen. Ein inneres Element umfasst ein dampfdurchlässiges Matrixmaterial, in dem Trocknungsmaterial dispergiert ist.

Aus der EP-A-0 261 923 ist ein Abstandhalterprofil gemäß dem Oberbegriff des Anspruchs 1 bekannt. Aufgabe der vorliegenden Erfindung ist es, ein Abstandhalterprofil für Isolierglasscheiben vorzuschlagen, bei dem bei einer einfachen Handhabung der Profile beim Zusammenbau zu Abstandhalterrahmen in einfacher Weise eine höhere Absorptionskapazität für Wasserdampf erhalten bleibt.

Diese Aufgabe wird bei dem eingangs erwähnten Abstandhalterprofil erfindungsgemäß dadurch gelöst, dass das Abstandhalterprofil eine Bindemittelmatrix und in der Matrix gebundenes partikuläres Adsorbens für Wasserdampf umfasst und dass die Bindemittelmatrix wasserdampfdurchlässig ist.

Aufgrund des Einbringens des partikulären Adsorbens in eine wasserdampfdurchlässige Bindemittelmatrix wird einerseits ein unmittelbarer Zugang von Wasserdampf aus der Fertigungsumgebung zu dem partikulären Adsorbens verhindert, da die Adsorptionsrate von der Wasserdampfdurchlässigkeit bzw. dem Transport von Wasserdampf durch die Bindemittelmatrix hindurch zu den Adsorbenspartikeln kontrolliert wird und damit auch gegenüber dem freien Zutritt von Wasserdampf zu den partikulären Adsorbentien, wie sie herkömmlich verwendet worden sind, deutlich verlangsamt und damit vermindert ist.

Überraschenderweise reicht die Wasserdampfdurchlässigkeit der Bindemittelmatrix aber vollkommen aus, um Wasserdampf zu dem partikulären Adsorbens durchdringen zu lassen und so für eine ausreichende Trocknung in dem Scheibenzwischenraum zu sorgen. Da das partikuläre Adsorbens während des Fertigungsprozesses aufgrund der Abschirmung durch die die Partikel umgebende Bindemittelmatrix lediglich geringe Wasserdampfmengen aufnehmen kann, steht bei einer fertig konfektionierten Isolierglasscheibe für den Scheibenzwischenraum eine deutlich höhere Adsorptionskapazität zur Verfügung, so dass letztendlich mit geringeren Adsorbermengen, bezogen auf das Volumen des Scheibenzwischenraums, gearbeitet werden kann. Da die Adsorbentien relativ teure Materialien sind, erzielt man so einen wirtschaftlicheren Einsatz derselben und kommt zu einer kostengünstigeren Fertigung der Abstandhalterrahmen.

Gleichzeitig stehen die Adsorbentien bei den erfindungsgemäßen Profilen auch noch in ausreichendem Maße für die Adsorption von außen eindringendem Wasserdampf zur Verfügung.

Darüber hinaus kann das Adsorbens in dem erfindungsgemäßen Profil auch noch eventuell ausgasende Lösemittel, Weichmacher oder dergleichen binden.

Darüber hinaus entfällt bei der Herstellung der Abstandhalterrahmen aus den erfindungsgemäßen Abstandhalterprofilen in der Regel die Handhabung von losen Trockenmitteln.

Besonders bevorzugte partikuläre Adsorbentien sind aus Silicagelen und/oder Alumino- bzw. Alumosilikaten, d.h. insbesondere natürlichen oder synthetischen Zeolithen, Molekularsieben und dergleichen ausgewählt.

Hierbei weisen die partikulären Adsorbentien vorzugsweise eine Porenstruktur mit Porengrößen im Bereich von 2 bis 25 Angström, weiter bevorzugt im Bereich von 2 bis 10 Angström auf.

Die Form und Größe der Partikel der Adsorbentien ist nicht so sehr entscheidend für den Erfolg der vorliegenden Erfindung, da die Zeiten, die für eine vollständige Adsorption der Wasserdampfanteile im Schreibenzwischenraum zur Verfügung stehen, ausreichend sind, um auch langsame Transportprozesse zu den adsorbierenden Partikeln hin wirksam werden zu lassen. Eine möglichst große Oberfläche der partikulären Adsorbentien kann eine schnellere Trocknung mit sich bringen, so dass bei einer bevorzugten Ausführungsform des Abstandhalterprofils das Adsorbens in Pulverform zum Einsatz, sprich zum Einbetten in die Matrix verwendet wird.

Andererseits sind, entsprechend den oben genannten Gesichtspunkten, durchaus partikuläre Adsorbentien mit Partikelgrößen im Bereich bis zu 6 mm vorstellbar, und die Größe der Partikel ist letztendlich lediglich durch die Abmessungen des Abstandhalterprofils selbst limitiert.

Bevorzugte Partikelgrößen liegen im Mittel im Bereich von 0,1 bis 5 mm. Die Untergrenze stellt sicher, dass in der Produktion, d.h. im Verwenden der Adsorbentien keine Probleme mit staubfeinen Teilchen auftreten können, während die Obergrenze andererseits dafür sorgt, dass in der Bindemittelmatrix noch eine ausreichende Packungsdichte zur Erzielung einer entsprechend großen Adsorptionskapazität für Wasserdampf erzielt werden kann.

Da die Diffusionsprozesse in den Adsorbensmaterialien, d.h. in den Adsorbenspartikeln, aufgrund der Porenstruktur durchaus schneller ablaufen können als die Diffusionsprozesse in der Bindemittelmatrix selbst, spielt bei einer ganzen Reihe von Materialkombinationen die Partikelgröße für die Geschwindigkeit des Trocknungsprozesses des Scheibenzwischenraumvolumens praktisch keine Rolle, so dass die zuvor erwähnten Vorteile von grobkörnigen Adsorbentien gegenüber der Pulverform entscheidend werden.

Die für die Erfindung im Vordergrund stehende Langzeitwirkung der Trocknungswirkung der Adsorbentien wird so mehr oder weniger unabhängig von Größe und Form der Adsorbenspartikel erreicht, so dass hier aufgrund anderer Gesichtspunkte die Auswahl frei getroffen werden kann.

Für die Langzeitwirkung ist schließlich entscheidend, dass für das vorgegebene Volumen des Scheibenzwischenraums und der darin enthaltenen Luftfeuchtigkeit ausreichend Adsorbenskapazität zur Verfügung steht. Diese Adsorbenskapazität wird zum einen bestimmt durch den Anteil von Adsorbens an der Gesamtmasse des Profils und zum anderen aber entscheidend auch durch den Trocknungsgrad der Adsorbentien, den diese aufweisen, wenn die Isolierglasscheibe nach Einbau des Abstandhalterrahmens hermetisch mit Dichtungsmittel versiegelt wird.

Die Anteile des partikulären Adsorbens an der Gesamtmasse des Abstandhalterprofils beträgt erfindungsgemäß 30 bis 65 Gew.%.

Weiter bevorzugt werden Mindestanteile von 40 Gew.%, noch weiter bevorzugt 50 Gew.%, da so eine ausreichend große Reserve, auch bei sehr großen Scheibenzwischenraumvolumina für die Wasserdampfadsorption gegeben ist.

Um zu einer schnellen Anfangstrocknungswirkung zu kommen, kann vorgesehen sein, dass die Konzentration des Adsorbens im Profil im Bereich der Seitenwandungen geringer als in den Bereichen der ersten und zweiten Querwand. Dadurch steht bei kurzen Diffusionswegen durch die Bindemittelmatrix mehr Adsorbens zur Verfügung.

Die erfindungsgemäß einzusetzenden Bindemittel werden bevorzugt ausgewählt aus organischen und/oder anorganischen Bindemitteln, wobei Beispiele für die organischen Bindemittel, insbesondere wasserlösliche Zellulose, thermoplastische Kunststoffe, insbesondere Polyamid, sind, während Beispiele für die anorganischen Bindemittel Polysiliciumverbindungen sind.

Durch die Auswahl der Materialien für die Bindemittelmatrix lässt sich gezielt die Geschwindigkeit der Wasserdampfdiffusion beeinflussen. Dies erlaubt eine Anpassung der erfindungsgemäßen Abstandhalterprofile an spezifische Erfordernisse, die aus der Art der Produktionsverfahren für die Isolierglasscheiben resultieren. Ist es beispielsweise erforderlich, dass die Profile bereits in vorgetrocknetem Zustand der Adsorbentien an den Isolierglashersteller geliefert werden, dann wird man ein Bindemittelmaterial, z.B. Polypropylen, bevorzugen, bei dem die Wasserdampfdiffusion eher langsam von statten geht, um zu vermeiden, dass das Abstandhalterprofil während des Transports merkliche, d.h. die verbleibende Adsorptionskapazität erheblich beeinträchtigende Mengen Wasserdampf aufnimmt. Überraschenderweise reichen bereits geringe Diffusionsgeschwindigkeiten für die Trocknungswirkung völlig aus. Da die Adsorbentien bei Bindemitteln mit geringen Diffusionsgeschwindigkeiten gegen vorzeitige Wasseraufnahme geschützt sind, reichen hier oft Anteile der Adsorbentien von bis zu 40 Gew.-% für eine langjährige, zufrieden stellende Trocknungswirkung völlig aus. Verwendet man beispielsweise Polypropylen als Bindemittelmatrixmaterial können oft schon Adsorbensanteile von 20 bis 30 Gew.-%, bezogen auf die Masse des fertigen Abstandhalterprofils vollkommen zufriedenstellende Ergebnisse liefern.

Der Diffusionsvorgang von Wasserdampf in den Bindemittelmaterialien lässt sich über den so genannten Permeationskoeffizienten (DIN 53122) beschreiben, der beispielsweise für Polypropylen im Bereich von 70 bis 100 g · µm/m² · d und für PA6 2000 bis 3000 g · µm/m² · d, jeweils bei 25 °C gemessen.

Materialien mit Permeationskoeffizienten für Wasserdampf bei 25 °C von bis zu ca. 500 g · µm/m² · d sind im Rahmen der vorliegenden Erfindung als Materialien mit geringen Diffusionsraten zu werten, die zum einen Abstandhalter ergeben, bei denen Herstell-, Lager- und Transportbedingungen weniger kritisch sind und bei denen zum anderen der Anteil an Adsorbens in der Bindemittelmatrix verringert werden kann.

Vorstellbar ist selbstverständlich auch, dass die Abstandhalterprofile in getrocknetem Zustand in feuchtigkeitsundurchlässigen Folien verpackt an die Isolierglashersteller geliefert werden, wobei dann die Auswahl der Materialien für die Bindemittelmatrix unabhängig von den oben genannten Gesichtspunkten getroffen werden kann.

Ist dagegen ein Isolierglashersteller in der Lage, die Abstandhalterprofile praktisch unmittelbar vor deren Verarbeitung zu Isolierglasscheiben zu trocknen, beispielsweise mittels eines Mikrowellenofens, dann besteht eher die Tendenz, ein Bindemittelmatrixmaterial zu verwenden, bei dem die Geschwindigkeit der Wasserdampfdiffusion relativ hoch ist, weil dies zum einen den Trocknungsvorgang beschleunigt und das in die Isolierglasscheiben verbaute Abstandhalterprofil dann auch relativ rasch die im Scheibenzwischenraum vorhandene Luftfeuchtigkeit aufnehmen kann.

Erfindungsgemäß wird das Bindemittel aufgeschäumt verwendet, was zum einen Gewicht bei den Abstandhalterprofilen spart und zum anderen selbstverständlich auch Bindemittelmaterial und darüber hinaus noch einen schnelleren Zugang, sprich eine schnellere Diffusion von Wasserdampfanteilen aus dem Scheibenzwischenraum zu den Adsorbentien möglich macht. Weiter beschleunigt wird der Diffusionsvorgang dann, wenn die Schaumstruktur eine offenporige Schaumstruktur ist.

Neben den Hauptkomponenten Bindemittel und partikuläres Adsorbens beinhaltet die Masse der Abstandhalterprofile vorzugsweise noch Füll- und/oder Verstärkungsstoffe und/oder Pigmente, die der weiteren Verbesserung einzelner Eigenschaften der Abstandhalterprofile dienen.

Über die Füllstoffe und Verstärkungsstoffe lässt sich die Druckfestigkeit der Abstandhalterprofilmaterialien verbessern, die Verstärkungsstoffe sorgen für höhere Elastizitätsmodule und die Pigmente lassen eine optische Anpassung der Abstandhalterprofile an die benachbart zu den Abstandhalterprofilen eingesetzten Bauteile bei der Fertigung der Isolierglasscheiben oder Wandpaneele zu.

Beispiele für vorgenannte Füll- und Verstärkungsstoffe sowie Pigmente sind Nanopartikel, insbesondere Montmorillonite, Flüssigkristallpolymere, Glas-, Kohlenstoff-, Aramid-, Metall- und/oder Naturfasern als Kurz-, Lang- und/oder Endlosfasern, Glimmerpartikel, Titandioxid, Wollastonit, Glashohlkugeln, Metallpulver und dergleichen.

Wie eingangs beschrieben ist das Bindemittelmaterial des Abstandhalterprofils notwendigerweise wasserdampfdurchlässig. Eine fertige Isolierglasscheibe wird am Außenrand mit einem üblichen Dichtungsmittel wie Polyurethan und dergleichen abgedichtet. Bei Edelgas gefüllten Isolierglasscheiben wird bevorzugt noch eine Edelgassperrschicht angeordnet, um ein Herausdiffundieren des Edelgases aus dem Scheibenzwischenraum zu unterdrücken.

Eine weitere Sicherung gegen das Eindringen von Wasserdampf in den Scheibenzwischenraum, insbesondere bei einem Altern der Dichtungsmittel, wird dadurch geschaffen, dass man eine Wasserdampfsperrschicht benachbart zur außenliegenden ersten Querwand des Abstandhalterprofils anordnet. Weiter bevorzugt erstreckt sich die Dampfsperrschicht auch in die an den Glasscheiben anliegenden Seitenwände des Abstandhalterprofils hinein. Dasselbe gilt auch für die Edelgassperrschicht.

Dabei kann die Dampfsperrschicht und gegebenenfalls die Edelgassperrschicht außen auf das Abstandhalterprofil aufgebracht werden oder aber weiter bevorzugt in das Abstandhalterprofilmaterial eingebettet werden, was bei der Handhabung der Abstandhalterprofile eventuelle mechanische Beschädigungen der Sperrschicht(en) vermeidet.

Reicht die mechanische Stabilität der Abstandhalterprofile, insbesondere deren Biegesteifigkeit, für typische bereits vorhandene Verarbeitungsanlagen zur Herstellung der Abstandhalterprofilrahmen noch nicht aus, kann erfindungsgemäß vorgesehen sein, dass in das Abstandhalterprofil Verstärkungselemente, insbesondere in Form von Streifen, Winkelprofilen, Drähten, Faserbündel, Geflechten sowie Folien aus Metall oder Faserkunststoffverbundwerkstoffen zur Aussteifung eingesetzt werden.

Über die eigentliche Geometrie der Abstandhalterprofile wurde bislang noch nichts Näheres definiert. Die erfindungsgemäßen Abstandhalterprofile können sowohl als Vollprofile als auch als Hohlkammerprofile ausgestaltet werden, wobei im letzteren Fall in Längsrichtung eine oder mehrere kontinuierlich verlaufende Hohlkammern angeordnet sind und/oder eine Mehrzahl an über den Querschnitt des Profils verteilten in Längsrichtung kontinuierlich verlaufenden Kanälen vorhanden ist.

Die Hohlkammern in dem Abstandhalterprofil sorgen für eine zusätzliche Isolierwirkung des Abstandhalterprofils und sparen gleichzeitig Material ein und machen somit das Abstandhalterprofil leichter. Bevorzugt weisen die Hohlkammern Durchgangsöffnungen auf, die im montierten Zustand durch die zweite Querwand hindurch vom Scheibenzwischenraum eine direkte Verbindung zu den Volumina in den Hohlkammern schaffen. Dadurch wird der Adsorptionsprozess für Wasserdampf weiter beschleunigt, da die Oberfläche, über die der Wasserdampf in das Material des Abstandhalterprofiles eindiffundieren kann, deutlich vergrößert ist. Zu diesem Zweck kann vorgesehen sein, dass eine Vielzahl von kleinvolumigen Kanälen die Hohlkammern bilden, welche einen relativ geringen Querschnitt aufweisen. Alternativ kann vorgesehen sein, dass mehrere großvolumige Kammern mit großem freien Querschnitt vorhanden sind oder aber, dass mehrere großvolumige Kammern gebildet werden, die von Seitenwandungen umgeben sind, in denen wiederum in gleichmäßiger Verteilung kleinvolumige Kanäle angeordnet sind. Dadurch lässt sich eine Maximierung der für die Diffusion von Wasserdampf zur Verfügung stehenden Oberfläche erreichen und gleichzeitig eine Minimierung des notwendigen Materials zur Bildung der Abstandhalter, begleitet von einer deutlichen Verbesserung des Wärmeleitwiderstandes dieser Abstandhalterprofile.

Um die Fertigung der Abstandhalterprofilrahmen aus den erfindungsgemäßen Abstandhalterprofilen zu erleichtern und insbesondere diese Fertigung mehr der Fertigungstechnik, die bislang für die metallenen Abstandhalter Anwendung fand, anzugleichen, kann vorgesehen sein, dass die erfindungsgemäßen Abstandhalterprofile ganz oder bereichsweise von einer Metalllage umgeben sind.

Alternativ bietet sich, allerdings unter anderen Gesichtspunkten, eine Ummantelung aus Kunststoff ganz oder bereichsweise an, wenn ein Kunststoffmaterial gewählt wird, welches einen deutlich geringeren Wasserdampfdurchgang aufweist als das erfindungsgemäß verwendete Bindemittel zur Bildung der Matrix des Profils.

Hier kann eventuell dann die zuvor diskutierte Dampfsperrwirkung bereits von der Ummantelungslage übernommen werden, so dass eine gesonderte Dampfsperrschicht bei solchen Profilen nicht mehr notwendig ist. Dies gilt insbesondere auch für solche erfindungsgemäßen Abstandhalterprofile, die von einer Metalllage umgeben sind. Bei einer vollständigen Ummantelung der Abstandhalterprofile müssen selbstverständlich auf Seiten des Scheibenzwischenraums in der zweiten Querwand des Profils Durchgangsöffnungen in der Ummantelung vorgesehen sein, so dass in dem Scheibenzwischenraum vorhandener Wasserdampf zu dem wasserdampfdurchlässigen Bindemittelmatrixmaterial durchdringen und so vom partikulären Adsorbens aufgenommen und gebunden werden kann.

Um eine weitere Möglichkeit der Anpassung der Trocknungskapazität der erfindungsgemäßen Profile bereitzustellen, kann vorgesehen sein, dass das Hohlprofil mindestens teilweise noch mit einem gesonderten losen Trockenmittel, d.h. einem gesonderten Adsorbens für Wasserdampf ganz oder teilweise gefüllt wird. Dadurch lässt sich mit einem Standardprofil die Wasserdampfbindekapazität einfach an die jeweiligen Erfordernisse, beispielsweise je nach Klimazone, in der die Fertigung der Abstandhalterrahmen vorgenommen wird oder auch unterschiedliche Volumina der Scheibenzwischenräume, anpassen.

Bevorzugt wird bei den erfindungsgemäßen Abstandhalterprofilen ein Oberflächenbereich bearbeitet oder strukturiert, beispielsweise durch Aufrauhen oder Anätzen. Dadurch lässt sich erreichen, dass Adsorbenspartikel an der Profiloberfläche mindestens partiell freigelegt werden, was die Wasserdampfaufnahmekinetik positiv beeinflusst.

Die vorliegende Erfindung betrifft des weiteren Abstandhalterrahmen, welche aus Rahmenteilen aus dem erfindungsgemäßen Abstandhalterprofil bzw. Abschnitten hiervon hergestellt sind.

Solche Abstandhalterrahmen können beispielsweise durch Ablängen des erfindungsgemäßen Abstandhalterprofiles und das Verbinden dieser Abschnitte in den Eckbereichen, beispielsweise mittels Kleben oder Schweißen, hergestellt werden.

Alternativ ist die Verwendung von Eckverbinderelementen vorgesehen, die beispielsweise die Form von Steckverbindungen haben können, die dann die beiden benachbarten Abstandhalterprofilabschnitte mittels Stoff-, Form- und/oder Kraftschluss miteinander verbinden. Gleichermaßen können sogenannte Längsverbinder hergestellt werden, mittels denen die Rahmenenden verbunden werden können.

Alternativ kann vorgesehen sein, dass die Abstandhalterprofile als Endlosmaterial zu Rahmen verarbeitet werden, wobei dann in den Bereichen, in denen eine Ecke ausgebildet werden soll, das Profil unter Erwärmen gebogen wird. Für das Erwärmen kann Strahlungswärme, Kontaktwärme, Warmluft, Induktions- bzw. Widerstandswärme Verwendung finden. Bevorzugt werden bei dieser Vorgehensweise Hohlprofile verarbeitet, da dann die Materialzwängung in den Eckbereichen vermindert ist.

Bei bevorzugten Abstandhalterprofilen ist an der die Außenoberfläche bildenden Oberflächen der Profile, d.h. der ersten Querwand, eine Führung , beispielsweise eine Schwalbenschwanzführung, vorgesehen, in die Eckverbinder einfach einsetzbar sind. Gleiches gilt auch für die zuvor angesprochenen Längsverbinder.

Daneben können auch separate Eck- und Längsverbinder in Form von Eckelementen bzw. Längsverbinderelementen hergestellt werden durch Spritzgießen, Spitzpressen, Formpressen, Kolbenpressen oder dergleichen, wobei dann dasselbe Material verwendet werden kann, wie bei der Herstellung der Abstandhalterprofile selbst. Auf diese Eckverbinder/Längsverbinder werden dann gerade Abschnitte der Abstandhalterprofile aufgesetzt bzw. mit diesen verbunden und so der geschlossene Abstandhalterrahmen insgesamt hergestellt.

Die Erfindung betrifft des weiteren ein Verfahren zur Herstellung der erfindungsgemäßen Abstandhalterprofile, wobei hier eine Masse, welche ein Bindemittel, ein partikuläres Adsorbens für Wasserdampf sowie ein Verarbeitungshilfsmittel umfasst, zu einem Profil geformt wird und danach das Verarbeitungshilfsmittel aus dem geformten Profil vollständig oder teilweise ausgetrieben wird.

Bevorzugt verwendete Verarbeitungshilfsmittel sind Wachse, insbesondere Polyethylenwachse, da diese bei Temperaturen ausgetrieben werden können, bei denen eine große Vielzahl von Bindemitteln, insbesondere die oben bereits definierten Bindemittel, noch thermisch stabil sind.

Der Anteil an Verarbeitungshilfsmitteln an der für die Formgebung verwendeten Masse beträgt bevorzugt bis zu 35 Gew.%. Die für die Formgebung verwendete Masse wird bevorzugt vor Eintritt in die formende Maschine vorgemischt, gegebenenfalls zuvor bereits compoundiert. Anteile von wenigen Gew.% liefern häufig bereits gute Resultate.

Für den Formvorgang bieten sich Extrudieren, Spritzgießen, Spritzpressen, Formpressen, Pultrudieren und auch Kolbenpressen an.

Bei dem erfindungsgemäßen Herstellungsverfahren für das erfindungsgemäße Abstandhalterprofil wird vorzugsweise eine Bindemittelmatrix verwendet, die nach der Formgebung vernetzt werden kann. Die Vernetzungsreaktion kann vorzugsweise gleichzeitig mit dem Austreiben des Verarbeitungshilfsmittels vorgenommen werden, und dies kann gegebenenfalls sogar gleichzeitig von einem Trocknungsvorgang begleitet werden. Über den Trocknungsvorgang wird das partikuläre Adsorbens, das in der Bindemittelmatrix verteilt vorliegt, konditioniert, d.h. seine Wasserdampfaufnahmefähigkeit bzw. seine Wasserdampfaufnahmekapazität maximiert.

Überraschenderweise stellt sich heraus, dass der zum Austreiben des Verarbeitungshilfsmittels notwendige Temperungsschritt, der beispielsweise bei 200 °C erfolgen kann, bei Verwendung von organischen Bindemitteln aufgrund von Vernetzungsvorgängen für die Matrix zu einer deutlichen Steigerung der Druckfestigkeit der Profile führt.

Diese und weitere Vorteile der Erfindung werden im Folgenden anhand der Zeichnungen noch näher erläutert. Es zeigen im Einzelnen:
- Figur 1: einen Ausschnitt einer Schnittdarstellung aus dem Randbereich einer mit einem erfindungsgemäßen Abstandhalterprofil hergestellten Isolierglasscheibe; und
- Figuren 2 bis 15: weitere Varianten eines erfindungsgemäßen Abstandhalterprofils im Querschnitt.

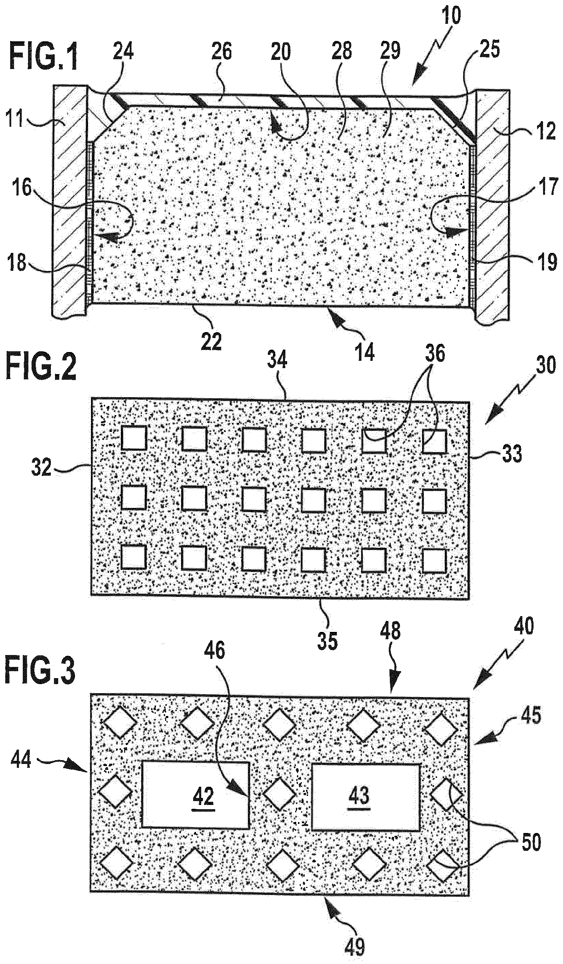

Figur 1 zeigt den Ausschnitt einer Schnittdarstellung einer insgesamt mit dem Bezugszeichen 10 bezeichneten Isolierglasscheibe, bei der zwei Glasscheiben 11, 12 mittels eines Abstandhalterprofils 14 auf einem vorgegebenen Abstand in paralleler Orientierung zueinander gehalten sind. Das Abstandhalterprofil 14 ist im Querschnitt im Wesentlichen von einem Rechteck abgeleitet und liegt mit Seitenwandungen 16, 17 an den Glasscheiben 11, 12 an. Die Verbindung zwischen den Seitenwandungen 16, 17 und den jeweils zugehörigen Glasscheiben 11 bzw. 12 wird über eine Klebemittelschicht 18, 19 bewerkstelligt.

Zwischen den Seitenwandungen 16, 17 erstrecken sich eine erste Querwandung 20 und eine zweite Querwandung 22, die zusammen mit den Seitenwandungen 16, 17 im Wesentlichen den Profilquerschnitt bilden.

Die Querwand 20 liegt bei montiertem Abstandhalterprofil 14 in der Isolierglasscheibe am äußeren Rand der Isolierglasscheibe 10 und ist an den Enden abgewinkelt, so dass sich angefaste Bereiche 24, 25 ergeben.

Nachdem der Abstandhalter 14 zwischen den beiden Glasscheiben 11 und 12 eingebaut ist, wird der Rand der Isolierglasscheibe 10 dann noch mit einem Dichtungsmittel 26 zwischen den beiden Glasscheiben 11 und 12 ganzflächlich bedeckt, wobei, falls die Wasserdampfsperrwirkung der Dichtungslage 26 nicht bereits durch das verwendete Material ausreichend gegeben ist, an dieser Stelle noch eine Wasserdampfsperrschicht oder gegebenenfalls, wenn der Scheibenzwischenraum zwischen den beiden Glasscheiben 11 und 12 mit einem Edelgas gefüllt ist, mit einer Edelgassperrschicht (beide Sperrschichten nicht dargestellt) versehen wird.

Das Abstandhalterprofil 14 besteht aus einem Bindemittelmaterial, beispielsweise Polyamid 6.6 mit einem Anteil von beispielsweise 50 Gew.% und einem in die Bindemittelmatrix 28 eingelagerten partikelförmigen Adsorbens 29 (schematisch durch die punktierte Struktur angedeutet). Das partikuläre Adsorbens 29 wird hier in Form von kugelförmigem Zeolith verwendet, wie er beispielsweise bei herkömmlichen Isolierglasscheiben bereits zum Einsatz kommt. Alternativ könnten beispielsweise auch Silicagele oder andere partikuläre Adsorbentien zum Einsatz kommen. Unter der Bezeichnung Phonosorb sind von der Firma Grace Davison eine Reihe gut geeigneter Adsorbentien zu erhalten.

Im Folgenden seien verschiedene Beispielrezepturen angegeben, die für die Fertigung der erfindungsgemäßen Abstandhalterprofile verwendet werden können.

| Probe | Zeolith 3A (Phonosorb 551) | Polymer (Polyamid 6.6) | Wachs (Polyolefinwachs) | Zug E Modul N/mm² (DIN 53457) |
|---|---|---|---|---|
| 1 | 30 Gew.% | 56 Gew.% | 14 Gew.% | 3000 |
| 2 | 50 Gew.% | 40 Gew.% | 10 Gew.% | 4400 |
| 3 | 65 Gew.% | 28 Gew.% | 7 Gew.% | 7000 |

Der Wachsanteil (Polyolefinwachs Licomont EK 583 des Herstellers Ciba) wird nach dem Extrudieren der Abstandhalterprofile bei ca. 220 °C ausgetrieben. Bei dieser Temperatur bleibt das als Bindemittelmatrix verwendete Polyamid 6.6 ausreichend thermisch stabil.

Die Druckfestigkeit der Probe 1 beträgt direkt nach der Extrusion, d.h. solange es noch das Verarbeitungshilfsmittel Wachs enthält, 35 N/mm², bei der Probe 3 ergeben sich 90 N/mm². Geprüft wurde nach DIN 53454.

Durch die oben genannte thermische Nachbehandlung, bei der das Wachs mindestens teilweise ausgetrieben wird (Behandlungsdauer ca. 24 Std) erhält man eine Steigerung der Druckfestigkeit aller Proben um ca. 15 bis 20 %.

Die Verarbeitung der als Proben 1 bis 3 bezeichneten Materialmischungen kann problemlos auf handelsüblichen Extrudern, aber auch Spritzgussmaschinen etc. erfolgen. Dabei können die Mischungsbestandteile in einem vorgeschalteten Mischungsprozess vorgemischt zu der Formgebungsmaschine gelangen. Es ist aber auch möglich, die Einzelbestandteile zunächst zu compoundieren und dann das Compound zum Abstandhalterprofil 14 auf der jeweiligen Formgebungsmaschine zu verarbeiten.

Wenn die Formgebungsmaschine entsprechende Funktionalität besitzt, besteht auch die Möglichkeit, die einzelnen Komponenten, nämlich Bindemittel (Polyamid 6.6), Adsorbens (Zeolith) und das Verarbeitungshilfsmittel (Polyethylenwachs) direkt der Formgebungsmaschine zuzuführen und dann zum Produkt, d.h. zum Abstandhalterprofil auszuformen.

Wird als Bindemittel wasserlösliche Methylcellulose verwendet, empfiehlt es sich häufig, diese im Gemisch mit einem mineralischen Bindemittel auf Silanbasis zu verarbeiten.

Bei der Verwendung der Kombination von Zeolith als Adsorbens und Methylcellulose und mineralischem Silanbindemittel (Methylsiloxanether) als Bindemittelmaterial wird bevorzugt immer in einem ersten Schritt bei tiefen Temperaturen (ca. 25 °C) eine Compoundierung vorgenommen und dann der nachfolgende Formgebungsprozess (Extrusion, Spritzguss etc.) ebenfalls bei tiefen Temperaturen (ca. 25 °C) durchgeführt und dabei dann das gewünschte Abstandhalterprofil geformt. Als Verarbeitungshilfsmittel kann wieder ein Polyolefinwachs, insbesondere Polyethylenwachs verwendet werden.

Sowohl beim Compoundier- als auch beim anschließenden Umformungsprozess ist durch die Wahl geeigneter Schnecken, Zylinder und mittels Werkzeugkühlung darauf zu achten, dass in der verarbeiteten Masse keine Vernetzung bzw. allenfalls eine leichte Vorvernetzung stattfinden kann.

Nach Abschluss des Formgebungsprozesses, d.h. dann wenn die Abstandhalterprofile fertig extrudiert sind, findet bei Temperaturen von beispielsweise 200 bis 210 °C eine Temperung statt, bei der die eigentliche Vernetzung durchgeführt wird, wobei dann das enthaltene Wasser und mindestens Teile des dabei verwendeten Verarbeitungshilfsmittels ausgetrieben werden.

Eine Alternative zu dem oben beschriebenen Polyamid als Material zur Bildung der Bindemittelmatrix stellt Polypropylen dar. Aufgrund des wesentlich geringeren Wasserdampfpermeationskoeffizienten in Polypropylen im Vergleich zu Polyamid, sind die Lagerungsbedingungen weniger kritisch und die notwendigen Anteile an Adsorbens können reduziert werden. Ein Anteil von beispielsweise 25 Gew.-% kann völlig ausreichend sein bei einem Scheibenabstand von 14 bis 16 mm und einer Scheibenfläche von ca. 1 m².

Figur 2 zeigt, wie in den folgenden beschriebenen Figuren 3 bis 15, weitere alternative Ausgestaltungen erfindungsgemäßer Abstandhalterprofile, wobei der Einfachheit halber jeweils nur eine simple Rechteckform des Profilquerschnitts gezeigt wird.

Selbstverständlich lässt sich die Querschnittsform variieren und beispielsweise so gestalten, wie dies der Außenkontur des in Figur 1 dargestellten Abstandhalterprofils 14 entspricht.

In Figur 2 ist ein Abstandhalterprofil 30 im Querschnitt dargestellt, mit Seitenwandungen 32, 33 und einer ersten und zweiten Querwand 34, 35.

Die Zusammensetzung des Materials aus dem das Abstandhalterprofil geformt wird beinhaltet wiederum wie bei dem Abstandhalterprofil 14 der Figur 1 eine Bindemittelmatrix, in die wieder ein partikuläres Adsorbens eingelagert ist.

Im Unterschied zu der massiven Bauweise des Abstandhalterprofils 14 der Figur 1 sind bei dem Abstandhalterprofil 30 der Figur 2 im Profilquerschnitt eine Vielzahl von Kanälen 36 regelmäßig über den Profilquerschnitt verteilt angeordnet. Die Kanäle 36 sind gasgefüllt, beispielsweise mit Luft, und verbessern die Isolierwirkung des Abstandhalterprofils 30 verglichen mit der bei dem Abstandhalterprofil 14 beobachteten Isolierwirkung, da die Wärmeleitfähigkeit der Gasanteile in den Kanälen 36 deutlich geringer ist als die des umgebenden Matrixmaterials mit eingelagertem Adsorbens.

Wie beim Abstandhalterprofil 14 geschieht der Trocknungsprozess für die in dem Scheibenzwischenraum vorhandene Feuchtigkeit und/oder dort vorhandener Anteile an Lösemitteln oder Weichmachern dadurch, dass diese Materialien durch die Bindemittelmatrix hindurch diffundieren und so zu den in die Bindemittelmatrix eingelagerten Adsorbentien gelangen und dort dann gebunden werden.

Die Kanäle 36 des Abstandhalterprofils 30 sind in Figur 2 rechteckförmig gezeigt. Es versteht sich, dass die Querschnittsform der Kanäle 36 im Prinzip beliebig sein kann, d.h. polygonal, rund, oval oder Mischformen dieser Querschnittsausbildungen.

Figur 3 zeigt eine weitere alternative Ausführungsform eines erfindungsgemäßen Abstandhalterprofils 40, welches als sogenanntes Hohlkammerprofil ausgeführt ist mit zwei großvolumigen Hohlkammern 42, 43. Die Hohlkammern 42, 43 tragen zu einer Verbesserung des Wärmewiderstandes des Abstandhalterprofils 40 bei. Zusätzlich, wie in Figur 3 dargestellt, können nun in den die beiden Hohlkammern 42, 43 umgebenden Seitenwandungen 44, 45, einem Mittelsteg 46 und in Querwänden 48, 49 kleinvolumige Kanäle 50 eingeformt werden, die den Kanälen 36 des Profils 30 der Figur 2 entsprechen. Nur der Anschauung halber sind die Kanäle hier rautenförmig ausgebildet, ohne dass das Abstandhalterprofil 40 der Figur 3 hierauf beschränkt wäre. Gleichermaßen könnten hier andere polygonale Kanalquerschnitte gewählt werden oder aber runde oder ovale oder Mischformen hieraus.

Durch die Anordnung der Kanäle 50 im Profilquerschnitt lässt sich eine weitere Verbesserung des Wärmewiderstands des Abstandhalterprofils 40 realisieren.

Die Anordnung der Kanäle 50 sowie der Hohlkammern 42, 43 verbessert nicht nur den Wärmewiderstand des Profils, sondern schafft auch zusätzlich Oberflächen, über die Wasserdampf, Lösemittel, Weichmacher etc. in das Bindemittelmatrixmaterial eindiffundieren und so zu den Adsorbentien gelangen können, wo sie dann festgehalten werden. Dieser Vorteil wird bereits bei der Mehrfachkanalstruktur des Abstandhalterprofils 30 der Figur 2 erzielt.

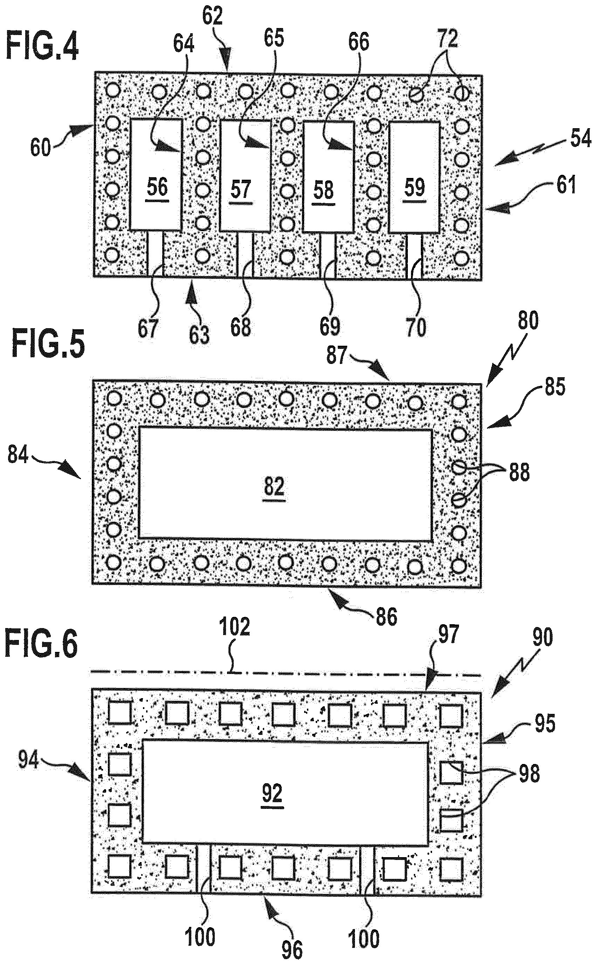

Die Figur 4 zeigt eine weitere alternative Ausführungsform eines Abstandhalterprofils 54, welches als Hohlkammerprofil ausgebildet ist und vier parallel nebeneinander liegende Hohlkammern 56, 57, 58, 59 aufweist. Diese Hohlkammern sind von Seitenwandungen 60, 61 sowie Querwänden 62, 63 umgeben sowie untereinander über Mittelstege 64, 64, 66 voneinander getrennt.

Die Querwand 62 stellt die erste Querwand dar und ist im eingebauten Zustand in einer Isolierglasscheibe am Rand der Isolierglasscheibe angeordnet. Die Querwand 63 weist somit zum Scheibenzwischenraum hin und weist in regelmäßiger Anordnung über die Längsrichtung des Profils 54 verteilt Durchgangsbohrungen 67, 68, 69, 70 auf, die eine direkte Kommunikation der Gasvolumina in den Hohlkammern 56, 57, 58, 59 mit dem Volumen des Scheibenzwischenraums gestattet, so dass die Diffusionsprozesse, die zum Trocknen benötigt werden, in die Hohlkammervolumina der Hohlkammern 56, 57, 58, 59 hinein beschleunigt werden und so insgesamt der Trocknungsvorgang effizienter wird.

In der Figur 4 ist nun fakultativ zusätzlich noch vorgesehen, dass in den Seitenwänden 60, 61, den Querwänden 62, 63 sowie auch den Mittelstegen 64, 65, 66 Kanäle 72 vorgesehen sind, die zum einen der weiteren Verbesserung der Isolierwirkung des Profils 54 dienen und zum anderen darüber hinaus erneut die Trocknungswirkung des Isolierprofils bzw. des darin vorhandenen Adsorbens befördern und des Weiteren die Längssteifigkeit des Profils erhöhen.

Figur 5 zeigt ein insgesamt mit dem Bezugszeichen 80 versehenes Abstandhalterprofil, welches als Hohlkammerprofil mit einer Hohlkammer 82 ausgebildet ist, welche von Seitenwänden 84, 85 sowie Querwänden 86, 87 ringsum umgeben ist. In den Seitenwänden 84, 85 und den Querwänden 86, 87 sind wieder Kanäle 88 angeordnet, die, wie vorher bereits mehrfach ausgeführt, auch einen anderen geometrischen Querschnitt aufweisen können als den hier gezeigten. Ansonsten sind die Seitenwände 84, 85 und die Querwände 86, 87 aus einer Bindemittelmatrix aufgebaut, welche ein partikuläres Adsorbens beinhaltet, so dass hier auf die vorherigen Ausführungen verwiesen werden darf.

Figur 6 stellt eine abgewandelte Ausführungsform der Figur 5 dar mit einem Abstandhalterprofil 90, welches als Hohlprofil mit einer Hohlkammer 92 ausgebildet ist. Die Hohlkammer 92 ist umgeben von Seitenwänden 94, 95 und Querwänden 96, 97, wobei die Querwand 96 in dem eingebauten Zustand des Abstandhalterprofils in einer Isolierglasscheibe zum Scheibenzwischenraum weist und damit die zweite Querwand darstellt, während die Querwand 97 am äußeren Rand der Isolierglasscheibe angeordnet ist und der ersten Querwand entspricht.

Die Seitenwände 94, 95 sowie 96, 97 sind mit einer Vielzahl von im Profilquerschnitt regelmäßig verteilten Kanälen 98 durchsetzt.

Das Material aus dem die Seitenwände und die Querwände 94, 95, 96, 97 gebildet sind ist wieder eine Bindemittelmatrix, in welcher ein Adsorbens für Wasserdampf eingelagert ist.

Gegenüber der Ausführungsform in Figur 5 unterscheidet sich das Abstandhalterprofil 90 nicht nur dadurch, dass die Kanäle 98 einen rechteckigen Querschnitt aufweisen, während die Kanäle 88 einen kreisrunden Querschnitt aufweisen, sondern auch dadurch, dass der Hohlraum 92 über Durchgangsöffnungen 100 mit dem Scheibenzwischenraum in direkter Verbindung steht. Wie bereits anhand der Figur 4 erläutert, erleichtern die Durchgangsöffnungen 100 den Gasaustausch und insbesondere die Dampfdiffusion in den Hohlraum 92 hinein, so dass hier eine schnellere Trocknungswirkung erzielt werden kann.

Das Gasvolumen des Hohlraums 92 ebenso wie das der Kanäle 98 dient wieder der Materialersparnis einerseits und der Förderung der Isolierwirkung des Abstandhalterprofils andererseits. Darüber hinaus ist durch die größere Oberfläche, durch die Wasserdampf in das Bindemittelmatrixmaterial hinein diffundieren kann, einen weitere Beschleunigung des Adsorptionsvorgangs möglich.

Schließlich weist die Figur 6 noch die Besonderheiten auf, dass auf Seiten der ersten Querwand 97 eine Dampfsperre 102 angeordnet ist (schematisch strichpunktiert angedeutet), die entweder darüber hinaus noch als Edelgassperrschicht fungieren oder mit einer gesonderten Edelgassperrschicht kombiniert sein kann. Im Falle, dass der Scheibenzwischenraum einer mit Hilfe des Abstandhalterprofils 90 hergestellten Isolierglasscheibe mit Edelgas gefüllt wird, empfiehlt sich die Edelgassperrschicht, um zu vermeiden, dass im Laufe der Jahre, in denen die Isolierglasscheibe im Einsatz ist, das Edelgas aus dem Scheibenzwischenraum entweicht und deshalb die Isolierwirkung abnimmt.

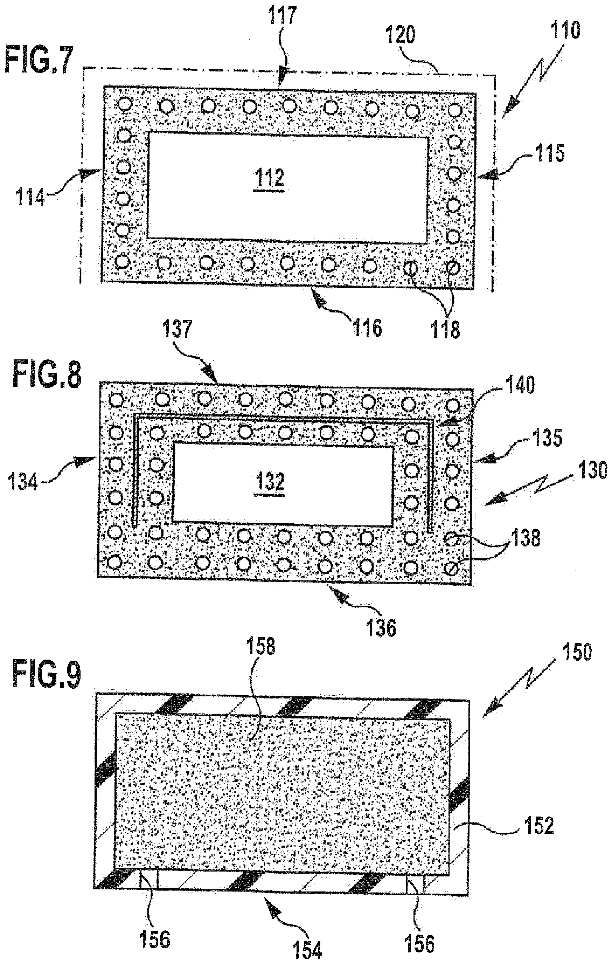

Figur 7 zeigt eine weitere Abwandlung der Ausführungsform der Figur 5 in Form eines Abstandhalterprofils 110, welches ebenfalls als Hohlprofil ausgebildet ist mit einer Hohlkammer 112, welche von Seitenwänden 114, 115 und Querwänden 116, 117 umgeben ist. In den Seitenwänden 114, 115 sowie in den Querwänden 116, 117 sind Kanäle 118 angeordnet, die demselben Zweck dienen wie die Kanäle 88 des Profils 80 in Figur 5.

Bei dem Abstandhalterprofil der Figur 7 ist außerdem an der ersten Querwandung 117 und an den Seitenwandungen 114, 115 eine Dampfsperrschicht 120 (schematisch als strichpunktierte Linie gezeichnet) angeordnet, die verhindert, dass in der Umgebungsluft vorhandene Luftfeuchtigkeit über Diffusionsvorgänge in den Innenraum der Isolierglasscheibe gelangen kann. Wie zuvor im Zusammenhang mit der Figur 6 erläutert kann die Dampfsperrschicht kombiniert sein mit einer Edelgassperrschicht im Falle, dass das Abstandhalterprofil 110 für die Fertigung von Edelgas gefüllten Isolierglasscheiben verwendet wird.

Figur 8 zeigt eine Variante des Abstandhalterprofils der Figur 7 in Form eines Abstandhalterprofils 130, welches erneut als Hohlprofil ausgebildet ist mit einer Hohlkammer 132, welche umgeben wird von Seitenwandungen 134, 135 sowie Querwandungen 136, 137. In den Seitenwänden 134, 135 sowie in den Querwänden 136, 137 sind Kanäle 138 in regelmäßiger Verteilung angeordnet, die, wie zuvor und bereits mehrfach ausgeführt, selbstverständlich einen anderen Querschnitt haben können als den hier gezeigten kreisrunden.

Im Gegensatz zu der Ausführungsform der Figur 7 beinhaltet das Abstandhalterprofil 130 der Figur 8 eine Dampfsperre 140, welche diesmal in die Querwand 137 sowie die Seitenwände 134, 135 eingebettet ist und so vor mechanischen Beschädigungen gut geschützt ist. Es darf darauf hingewiesen werden, dass die Abmessungen aller Figuren und insbesondere hier die Abmessungen der Figur 8 und insbesondere die Anordnung der Dampfsperrschicht 140 bzw. deren Abstand zu den Außenoberflächen der Seitenwände 134, 135 und zur ersten Querwand 137 nur schematisch dargestellt sind/ist und selbstverständlich viel näher an der jeweiligen Wandoberfläche liegen können. Auch ist es nicht notwendig, dass zwischen der Dampfsperrschicht 140 und der Außenoberfläche der jeweiligen Wand Kanäle 138 angeordnet sein müssen. Vielmehr können die Kanäle alle innerhalb des von der Dampfsperrschicht 140 abgeschirmten Bereichs liegen.

Figur 9 stellt eine weitere Variante des erfindungsgemäßen Abstandhalterprofils dar und zeigt ein Abstandhalterprofil 150, welches als Vollprofil ausgebildet und von einer Ummantelung 152 praktisch allseitig umgeben ist. Die Ummantelung 152 weist nur auf der dem Scheibenzwischenraum zugewandten Querwand 154 Durchgangsöffnungen 156 auf, durch die eine Diffusion von Wasserdampf aus dem Scheibenzwischenraum zu einem Kern 158 des Profils 150 führt, welcher aus einem Bindemittelmatrixmaterial und darin eingelagerten Adsorbenspartikeln besteht.

Wird die Ummantelung 152 aus einem Metallblech oder einer Metallfolie hergestellt, erübrigt sich jedenfalls in aller Regel das Anbringen einer zusätzlichen Dampfsperrschicht. Alternativ zu einer Ummantelung 152 aus Metall kann auch eine Ummantelung aus Kunststoff, insbesondere auch aus Verbundwerkstoff vorgesehen sein, welche ähnliche Eigenschaften haben kann. In jedem Fall kann die Ummantelung 152 dazu verwendet werden, dem Profil 150 eine größere Längssteifigkeit zu geben, so dass die Durchbiegung des Profils 150 geringer ausfällt als dies beispielsweise bei dem Profil 14 der Figur 1 der Fall ist.

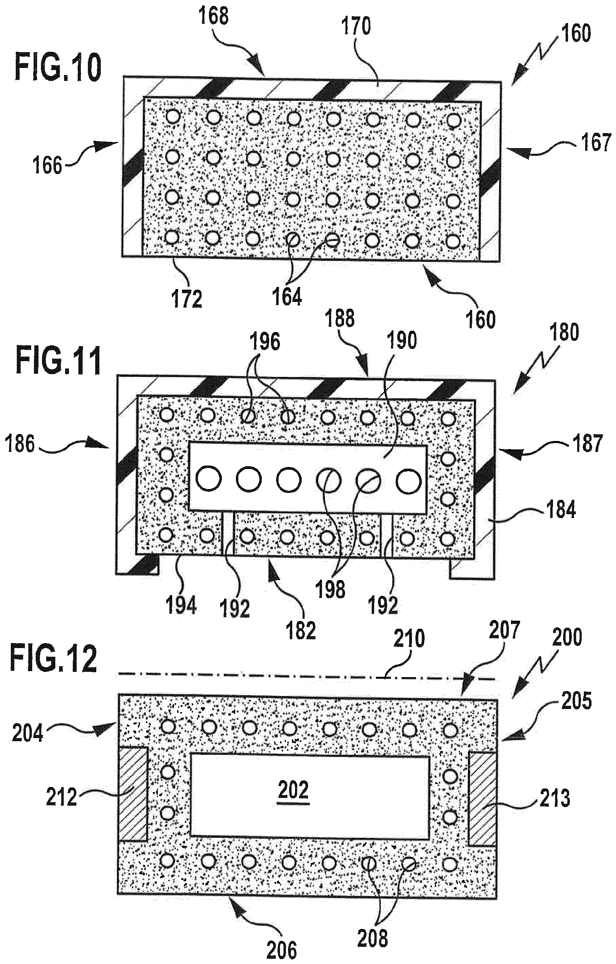

Die Figur 10 zeigt eine abgewandelte Ausführungsform eines Abstandhalterprofils 160, bei dem ein Kern 162 aus einem Bindemittelmatrixmaterial mit eingelagerten Adsorbenspartikeln von Kanälen 164 durchzogen ist. Der Kern 162 des Abstandhalterprofils 160 ist an seinen Seitenwandungen 166, 167 und an seiner ersten Querwand 168 von einer Ummantelung 170 umgeben, welche eine zweite Querwand 172 des Kerns 160, die zum Scheibenzwischenraum im eingebauten zustand weist, frei lässt.

Damit steht die gesamte Fläche der Querwand 172 für den Diffusionsprozess des Eindiffundierens von Wasserdampf in den Kern 160 zur Verfügung.

Gleichzeitig reicht oftmals die Versteifung des Profils 160 durch die Ummantelung 170 vollständig aus, um das Profil 160 mit herkömmlichen, aus der Verarbeitung von Metallabstandhaltern bekannten Vorrichtungen verarbeitbar zu machen.

Der Wärmefluss durch die Seitenwandungen 166, 167 über 168 kann abgemindert werden indem bevorzugt im Bereich der Kanten des Profils die Ummantelung 170 schlitzartig unterbrochen wird.

In ähnlicher Form weist in Figur 11 ein Abstandhalterprofil 180 einen Kern 182 auf, welcher von einer Ummantelung 184 im Wesentlichen dreiseitig, d.h. auf Seiten seiner Seitenwände 186, 187 und einer Querwand 188 umgeben ist. Der Kern 182 wiederum ist als Hohlprofil ausgebildet mit einer Hohlkammer 190, welche über Durchbruchsöffnungen 192 mit dem Volumen des Scheibenzwischenraums in direkter Verbindung steht.

In den Seitenwänden 186, 187, der Querwand 188 und der weiteren Querwand 194 sind Kanäle 196 angeordnet, welche dieselbe Funktion aufweisen wie die zuvor bei den früheren Ausführungsbeispielen beschriebenen Kanäle.

Im Innern der Hohlkammer 190 sind zusätzliche Anteile an Trockenmittel in loser Form (Partikel 198) angeordnet, und der Füllgrad der Hohlkammer 190 bestimmt den zusätzlichen Trocknungseffekt, der mit diesem Profil 180 erzielt werden kann.

Die Ummantelung des in Figur 11 gezeigten Profils 180 unterscheidet sich von der Ummantelung 170 des Profils 160 in Figur 10 dadurch, dass die Ummantelung noch über die Seitenflächen 186, 187 hinaus weiterreicht und die beiden Randbereiche der Querwand 194 noch umgreift. Dadurch kann eine mechanische Sicherung ohne weitere zusätzlichen Maßnahmen, wie z.B. Verkleben, herbeigeführt werden, was die Herstellung solcher Profile erleichtert. Wiederum kann die Ummantelung aus Metall oder verstärktem Kunststoff sein und dient dabei der Erhöhung der Biegesteifigkeit dieses Profils oder der besseren Verklebbarkeit.

Figur 12 zeigt eine weitere grundlegende Variante des erfindungsgemäßen Abstandhalterprofils 200, welches wiederum als Hohlkammerprofil ausgebildet ist mit einer Hohlkammer 202, welche umgeben ist von Seitenwänden 204, 205 sowie Querwänden 206, 207. In den Seitenwänden 204, 205 sowie den Querwänden 206, 207 sind Kanäle 208 angeordnet und auf Seiten der Querwand 207 ist eine Dampfsperrschicht 210 (schematisch als strichpunktierte Linie gezeigt) vorgesehen, die gegebenenfalls mit einer Edelgassperrschicht kombiniert werden kann.

In den Seitenwänden 204, 205 sind Metallstreifen 212, 213 bündig eingelassen, die einer Versteifung des Profils 200 dienen.

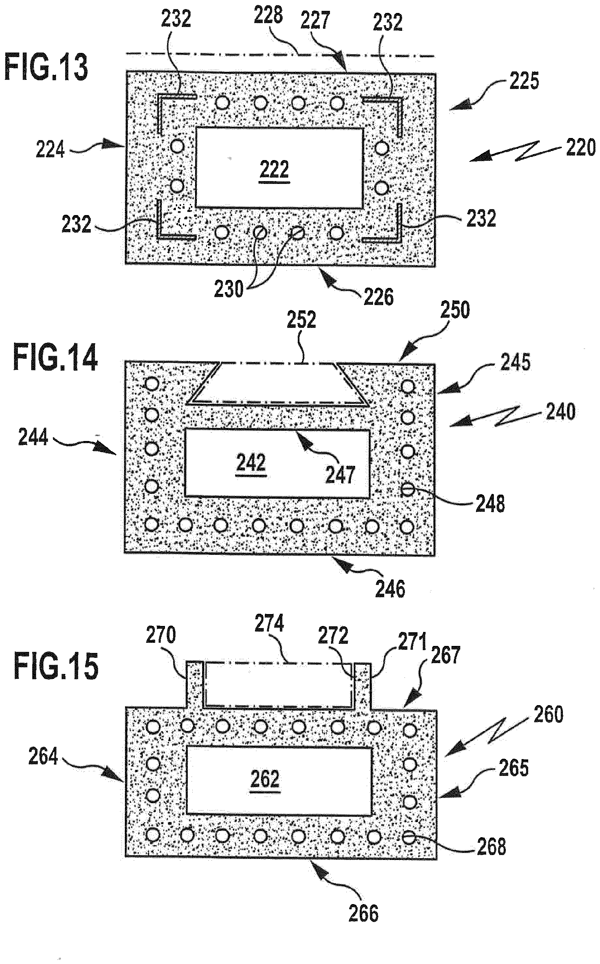

Figur 13 zeigt eine alternative Ausführungsform zu dem Profil 200 der Figur 12, wobei ein Abstandhalterprofil 220 wiederum als Hohlprofil ausgeführt ist mit einer Hohlkammer 220, welche umgeben ist von Seitenwänden 224, 225 sowie Querwänden 226, 227.

An der außenliegenden ersten Querwand 227 ist eine Dampfsperrschicht 228 (schematisch als strichpunktierte Linie gezeigt) angeordnet, die gegebenenfalls mit einer Edelgassperrschicht kombiniert sein kann.

In den Seitenwänden 224, 225 sowie in den Querwänden 226, 227 sind Kanäle 230 angeordnet.

In den Eckbereichen des Profils 220 sind Winkelstücke 232, vorzugsweise aus Metall oder einem Verbundwerkstoff, zur Versteifung des Profils 220 vorgesehen.

In Figur 14 ist eine weitere Variante eines erfindungsgemäßen Abstandhalterprofils 240 gezeigt, welches ebenfalls als Hohlprofil mit einer Hohlkammer 242 ausgebildet ist. Die Hohlkammer 242 ist von Seitenwänden 244, 245 sowie Querwänden 246, 247 umgeben, welche Kanäle 248 beinhalten. In der Querwand 247 sind zwar keine Kanäle 248 eingezeichnet, doch versteht sich für den Fachmann von selbst, dass bei einer entsprechenden Dimensionierung der Dicke der Querwand 247 auch hier Kanäle 248 unterzubringen sind. Alternativ können selbstverständlich Kanäle mit geringerer Querschnittsfläche ausgebildet werden und die Erfindung ist selbstverständlich nicht darauf beschränkt, dass nur Kanäle mit identischer Querschnittsfläche oder auch -form verwendet werden, sondern es sind, wie dem Fachmann leicht verständlich, von den jeweiligen Gegebenheiten der Grundstruktur des Profils limitiert, beliebige Kombinationen und Abwandlungen möglich.

Anders als bei den bisher besprochenen Ausführungsbeispielen an Abstandhalterprofilen ist das Profil 240 auf seiner Außenoberfläche der Querwand 247 mit einer Schwalbenschwanzführung 250 ausgestattet, in die (strichpunktiert angedeutet) ein Eck- oder Längsverbinder 252 einschiebbar ist. Eckverbinder dienen dazu, abgelängte Abstandhalterprofilrahmenteile über eine Steckverbindung miteinander zu verbinden und zu halten, während Längsverbinder dazu geeignet sind, Profilabschnitte des Abstandhalterprofils 240 geradlinig miteinander zu verbinden, um so den Abstandhalterprofilrahmen 240 zusammenzufügen.

Der Eckverbinder 252 kann in der Schwalbenschwanzführung 250 im Klemm- oder Presssitz gehalten sein oder aber dort stoffschlüssig verbunden werden.

Eine Variante zu der Ausführungsform der Figur 14 ist in Figur 15 dargestellt, wo bei einem Abstandhalterprofil 260 eine Hohlkammer 262 von Seitenwänden 264, 265 und Querwänden 266, 267 umgeben ist. In den Quer- und Seitenwänden 264, 265, 266, 267 sind Kanäle 268 in regelmäßiger Verteilung angeordnet.

Auf der außenliegenden Oberfläche der ersten Querwand 267, die benachbart zum Randbereich einer Isolierglasscheibe im montierten Zustand zu liegen kommt, sind senkrecht abstehenden Stege 270, 271 vorgesehen, die parallel zueinander beabstandet sind und in Längsrichtung des Profils verlaufen. Diese Stege 270, 271 definieren zwischen sich eine Aufnahme 272, in die ein Eckverbinder oder ein Längsverbinder mit derselben Funktion wie im Zusammenhang mit der Figur 14 beschrieben eingesetzt werden kann (strichpunktierte Darstellung des Teils 274).

Es versteht sich für den Fachmann von selbst, dass die Besonderheiten, die an einzelnen Ausführungsbeispielen vorstehend beschrieben worden sind, sich leicht auf andere Ausführungsbeispiele übertragen oder dort direkt ebenfalls anwenden lassen. Ebenfalls gelten alle Vorteilsangaben, die zu einzelnen Ausführungsvarianten gemacht sind in gleicherweise für die anderen, wenn dort dieselben Ausstattungsmerkmale bei den Profilen verwendet sind, auch wenn dies im einzelnen jeweils nicht jedes Mal angesprochen wurde. Dies gilt nicht nur für den Querschnitt der Kanäle, die die Profile durchziehen, sondern ebenso für deren Vorteile, genauso gilt dies für die Durchbrüche, die eine Verbindung zwischen den Hohlkammern der einzelnen Profile und dem Scheibenzwischenraum schaffen. Ebenso gilt dies, um nur ein weiteres Beispiel zu nennen, für die in die Hohlkammern lose einfüllbaren zusätzlichen Trockenmittelpartikel.

Bei den zuvor im Einzelnen beschriebenen Abstandhalterprofilen, die als Hohlkammerprofile ausgelegt sind, reichen oft schon Wandstärken von 1 bis 2 mm aus um eine ausreichende Festigkeit zu erzielen. Die dabei zur Verfügung gestellten Volumina in den Wänden des Hohlprofils für die Aufnahme von Adsorbens sind ebenfalls ausreichend, sodass auch bei diesen Ausführungsformen auf ein zusätzliches Befüllen der Hohlkammern mit Adsorbenspartikeln in den Wänden der Hohlkammerprofilen betragen vorzugsweise 20 bis 30 Gew.-%, vor allem, wenn Bindemittelmatrixmaterialien zum Einsatz kommen, die, wie z.B. Polypropylen, relativ geringe Permeationskoeffizienten für Wasserdampf zeigen.

## Patentansprüche

1. Abstandhalterprofil (14; 30; 40; 54; 80; 90; 110; 130; 150; 160; 180; 200; 220; 240; 260) für Isolierglasscheiben (10) mit einem von einer Rechteckform abgeleiteten Profilquerschnitt, wobei bei der Bildung der Isolierglasscheiben (10) zwei zueinander parallel beabstandete Seitenwandungen (16, 17; 32, 33; 44, 45; 60, 61; 84, 85; 94, 95; 114, 115; 134, 135; 166, 167; 186, 187; 204, 205; 224, 225; 244, 245; 264, 265) des Profils an den auf Abstand zu haltenden Glasscheiben (11, 12) anliegen, wobei eine erste und eine zweite, sich zwischen den Seitenwandungen ersteckende Querwand (20, 22; 34, 35; 48, 49; 62, 63; 86, 87; 96, 97; 116, 117; 136, 137; 154; 168, 172; 188; 194; 226, 206, 207; 226, 227; 246, 247; 266, 267) vorhanden sind, wobei die erste Querwand (20; 34; 48; 62; 87; 97; 117; 137; 168; 188; 207; 227; 247; 267) benachbart zum Scheibenrand und die zweite Querwand (22; 35; 49; 63; 86; 96; 116; 136; 154; 172; 194; 206; 226; 246; 266) zum Scheibenzwischenraum hin angeordnet ist, wobei das Abstandhalterprofil eine Bindemittelmatrix und in der Matrix des Bindemittels eingelagertes partikuläres Adsorbens für Wasserdampf umfasst, die Bindemittelmatrix Wasserdampf durchlässig ist und das Bindemittel aufgeschäumt ist, **dadurch gekennzeichnet, dass** der Anteil des partikulären Adsorbens an der Gesamtmasse des Abstandhalterprofils 30 bis 65 Gew.% beträgt.

2. Abstandhalterprofil (14; 30; 40; 54; 80; 90; 110; 130; 150; 160; 180; 200; 220; 240; 260) nach Anspruch 1, **dadurch gekennzeichnet, dass** das partikuläre Adsorbens ausgewählt ist aus Silicagelen und/oder Aluminosilikaten.

3. Abstandhalterprofil (14; 30; 40; 54; 80; 90; 110; 130; 150; 160; 180; 200; 220; 240; 260) nach Anspruch 1 oder 2, **dadurch gekennzeichnet, dass** das partikuläre Adsorbens eine Mikroporenstruktur aufweist mit Porengrößen im Bereich von 2 bis 25 Angström, weiter bevorzugt im Bereich von 2 bis 10 Angström.

4. Abstandhalterprofil (14; 30; 40; 54; 80; 90; 110; 130; 150; 160; 180; 200; 220; 240; 260) nach einem der voranstehenden Ansprüche, **dadurch gekennzeichnet, dass** das partikuläre Adsorbens in Pulverform in die Matrix eingelagert ist, wobei bevorzugt das partikuläre Adsorbens Partikel mit einer Partikelgröße bis zu 6 mm aufweist.

5. Abstandhalterprofil (14; 30; 40; 54; 80; 90; 110; 130; 150; 160; 180; 200; 220; 240; 260) nach einem der voranstehenden Ansprüche, **dadurch gekennzeichnet, dass** der Anteil des partikulären Adsorbens an der Gesamtmasse des Abstandhalterprofils 40 Gew.% oder mehr, am meisten bevorzugt 50 Gew.% oder mehr beträgt.

6. Abstandhalterprofil (14; 30; 40; 54; 80; 90; 110; 130; 150; 160; 180; 200; 220; 240; 260) nach einem der voranstehenden Ansprüche, **dadurch gekennzeichnet, dass** das Abstandhalterprofil ein Extrudat und/oder Pultrudat ist, wobei bevorzugt das Bindemittel ausgewählt ist aus organischen und/oder anorganischen Bindemitteln, insbesondere wasserlöslicher Methylcellulose, thermoplastischen Kunststoffen, insbesondere Polyamid oder Polypropylen, oder Polysiliziumverbindungen.

7. Abstandhalterprofil (14; 30; 40; 54; 80; 90; 110; 130; 150; 160; 180; 200; 220; 240; 260) nach einem der voranstehenden Ansprüche, **dadurch gekennzeichnet, dass** in der Bindemittelmatrix Füll- und/oder Verstärkungsstoffe und/oder Pigmente und/oder UV-Stabilisatoren eingelagert sind, wobei vorzugsweise die Füll- und/oder Verstärkungsstoffe und/oder Pigmente ausgewählt sind aus Nanopartikeln, Flüssigkristallpolymeren, Glas-, Kohlenstoff-, Aramid-, Natur- und/oder Metallfasern als Kurz-, Lang- und/oder Endlosfasern, Glimmer, Titandioxid, Wollastonit oder Glashohlkugeln.

8. Abstandhalterprofil (14; 30; 40; 54; 80; 90; 110; 130; 150; 160; 180; 200; 220; 240; 260) nach einem der voranstehenden Ansprüche, **dadurch gekennzeichnet, dass** das aufgeschäumte Bindemittel eine offenporige Schaumstruktur aufweist.

9. Abstandhalterprofil (90; 110; 130; 200; 220) nach einem der voranstehenden Ansprüche, **dadurch gekennzeichnet, dass** das Profil benachbart zur ersten Querwand (97; 117; 137; 207; 227) eine Dampfsperrschicht (102; 120; 140; 210; 228) und gegebenenfalls eine Edelgassperrschicht umfasst, wobei bevorzugt die Dampfsperrschicht (102; 120; 140; 210; 228) und gegebenenfalls eine Edelgassperrschicht sich bis in die an den Isolierglasscheiben anliegenden Seitenwandungen (94, 95; 114, 115; 134, 135; 204, 205; 224, 225) hinein erstreckt, wobei optional die Dampfsperrschicht und gegebenenfalls eine Edelgassperrschicht in den Profilkörper eingebettet ist.

10. Abstandhalterprofil (14; 30; 40; 54; 80; 90; 110; 130; 150; 160; 180; 200; 220; 240; 260) nach einem der voranstehenden Ansprüche, **dadurch gekennzeichnet, dass** das Profil ein massives Profil ist, oder alternativ das Profil ein Hohlprofil mit einer oder mehreren in Längsrichtung kontinuierlich verlaufenden Hohlkammern (42, 43; 56, 57, 58, 59; 82; 92; 112; 132; 190; 202; 242; 262) ist und/oder eine Mehrzahl von über den Querschnitt des Profils verteilten in Längsrichtung kontinuierlich verlaufenden Kanälen (36; 50; 72; 88; 98; 118; 138; 164; 196; 208; 230; 248; 268) aufweist, wobei optional die Hohlkammer oder die Hohlkammern in der zweiten Querwand in regelmäßigen Abständen Durchgangsöffnungen aufweist/aufweisen und/oder das Profil eine oder mehrere großvolumige Kammer(n), welche von Hohlkammerwänden umgeben ist/sind, umfasst sowie eine Mehrzahl von in den Hohlkammerwänden verteilt angeordnete kleinvolumige Kanäle umfasst.

11. Abstandhalterprofil (150; 160; 180) nach einem der voranstehenden Ansprüche, **dadurch gekennzeichnet, dass** das Profil ganz oder teilweise mit einem Kunststoffmaterial oder einem metallischen Material ummantelt ist und/oder dass die Bindemittelmatrix aus einem Material mit einem Permeationskoeffizienten für Wasserdampf kleiner oder gleich 500 g · µm/m² · d ausgewählt ist, wobei bevorzugt die Bindemittelmatrix überwiegend aus Polypropylen gebildet ist.

12. Abstandhalterrahmen für Isolierglasscheiben, hergestellt unter Verwendung von aus dem Abstandhalterprofil (14; 30; 40; 54; 80; 90; 110; 130; 150; 160; 180; 200; 220; 240; 260) nach einem der Ansprüche 1 bis 11 gefertigten Rahmenteilen, wobei optional die Rahmenteile bedarfsweise von einem Endlosprofilmaterial abgelängt und an den Rahmenecken mittels Schweißen oder Kleben miteinander verbunden sind, wobei weiter optional die Rahmenteile an den Rahmenecken mittels Eckverbinderelementen verbunden sind, wobei gegebenenfalls die Eckverbinderelemente im Stoff-, Form- und/oder Kraftschluss mit den Rahmenteilen verbunden sind.

13. Abstandhalterrahmen nach Anspruch 12, **dadurch gekennzeichnet, dass** die Eckbereiche des Rahmens mittels Biegen hergestellt sind, wobei die zu biegenden Bereiche vor dem Biegevorgang und gegebenenfalls auch während dem Biegevorgang erwärmt werden, insbesondere mittels Anwendung von Strahlungswärme, Kontaktwärme, Warmluft, Induktion oder Widerstandswärme und/oder dass die Außenoberfläche des den Rahmen bildenden Profils Führungselemente zur Aufnahme von Eck- und/oder Längsverbindern umfasst und/oder dass die Eckverbinderelemente durch Spritzgießen, Spritzpressen, Formpressen, Kolbenpressen im Wesentlichen aus demselben Material hergestellt sind wie das Abstandhalterprofil (14; 30; 40; 54; 80; 90; 110; 130; 150; 160; 180; 200; 220; 240; 260) selbst.

14. Verfahren zur Herstellung eines Abstandhalterprofils (14; 30; 40; 54; 80; 90; 110; 130; 150; 160; 180; 200; 220; 240; 260) nach einem der Ansprüche 1 bis 11, **dadurch gekennzeichnet, dass** eine Masse, umfassend das wasserdampfdurchlässige Bindemittel, das partikuläre Adsorbens für Wasserdampf und ein Verarbeitungsmittel, zu einem Profil ausgeformt wird, wobei das Verarbeitungshilfsmittel insbesondere ein Wachs ist, und danach vollständig oder teilweise aus dem geformten Profil ausgetrieben wird.

15. Verfahren zur Herstellung eines Abstandhalterprofils (14; 30; 40; 54; 80; 90; 110; 130; 150; 160; 180; 200; 220; 240; 260) nach Anspruch 14, **dadurch gekennzeichnet, dass** das Verarbeitungshilfsmittel einen Anteil an der Gesamtmasse, die zur Ausformung des Profils verwendet wird, von bis zu 35 Gew.-% umfasst.

16. Verfahren nach Anspruch 14 oder 15, **dadurch gekennzeichnet, dass** nach der Formgebung des Profils das Bindemittel vernetzt wird, gegebenenfalls begleitet von einem Austreiben verwendeter Verarbeitungshilfsmittel und gegebenenfalls kombiniert mit einer Trocknung des Profils (14; 30; 40; 54; 80; 90; 110; 130; 150; 160; 180; 200; 220; 240; 260).

## Claims

1. A spacer profile (14; 30; 40; 54; 80; 90; 110; 130; 150; 160; 180; 200; 220; 240; 260) for insulating glass panes (10), said profile having a profile cross section based on a rectangular shape, wherein, when forming the insulating glass panes (10), two side walls (16, 17; 32, 33; 44, 45; 60, 61; 84, 85; 94, 95; 114, 115; 134, 135; 166, 167; 186, 187; 204, 205; 224, 225; 244, 245; 264, 265) of the profile, which are spaced at distance from each other in parallel, abut against the glass panels (11, 12) to be kept apart from each other, wherein a first and a second transverse wall (20, 22; 34, 35; 48, 49; 62, 63; 86, 87; 96, 97; 116, 117; 136, 137; 154; 168, 172; 188; 194; 226, 206, 207; 226; 227; 246, 247; 266, 267) extending between the side walls are present, wherein the first transverse wall (20; 34; 48; 62; 87; 97; 117; 137; 168; 188; 207; 227; 247; 267) is arranged adjacent to the edge of the pane and the second transverse wall (22; 35; 49; 63; 86; 96; 116; 136; 154; 172; 194; 206; 226; 246; 266) is arranged toward the interspace between the panels, wherein the spacer profile comprises a binder matrix and, embedded in the matrix of the binder, particulate adsorbent for water vapor, the binder matrix is permeable to water vapor, and the binder is foamed, **characterized in that** the proportion of the particulate adsorbent in the total mass of the spacer profile is 30 to 65% by weight.

2. The spacer profile (14; 30; 40; 54; 80; 90; 110; 130; 150; 160; 180; 200; 220; 240; 260) in accordance with Claim 1, **characterized in that** the particulate adsorbent is selected from silica gels and/or aluminosilicates.

3. The spacer profile (14; 30; 40; 54; 80; 90; 110; 130; 150; 160; 180; 200; 220; 240; 260) in accordance with Claim 1 or 2, **characterized in that** the particulate adsorbent has a microporous structure with pore sizes in the range of 2 to 25 angstrom units, further preferably in the range of 2 to 10 angstrom units.

4. The spacer profile (14; 30; 40; 54; 80; 90; 110; 130; 150; 160; 180; 200; 220; 240; 260) in accordance with any one of the preceding Claims, **characterized in that** the particulate adsorbent is embedded into the matrix in powder form, wherein the particulate adsorbent preferably has particles with a particle size of up to 6 mm.

5. The spacer profile (14; 30; 40; 54; 80; 90; 110; 130; 150; 160; 180; 200; 220; 240; 260) in accordance with any one of the preceding Claims, **characterized in that** the proportion of the particulate adsorbent in the total mass of the spacer profile is 40% by weight or more, most preferably 50% by weight or more.

6. The spacer profile (14; 30; 40; 54; 80; 90; 110; 130; 150; 160; 180; 200; 220; 240; 260) in accordance with any one of the preceding Claims, **characterized in that** the spacer profile is an extrudate and/or pultrudate, wherein the binder is preferably selected from organic and/or inorganic binders, in particular water-soluble methyl cellulose, thermoplastic materials, in particular polyamide or polypropylene, or polysilicon compounds.

7. The spacer profile (14; 30; 40; 54; 80; 90; 110; 130; 150; 160; 180; 200; 220; 240; 260) in accordance with any one of the preceding Claims, **characterized in that** fillers and/or reinforcing agents and/or pigments and/or UV stabilizers are embedded in the binder matrix, wherein the fillers and/or reinforcing agents and/or pigments are preferably selected from nanoparticles, liquid crystal polymers, glass fibers, carbon fibers, aramide fibers, natural fibers, and/or metal fibers in the form or short, long, and/or continuous fibers, mica, titanium oxide, wollastonite, or hollow spheres of glass.

8. The spacer profile (14; 30; 40; 54; 80; 90; 110; 130; 150; 160; 180; 200; 220; 240; 260) in accordance with any one of the preceding Claims, **characterized in that** the foamed binder has an open-porous foam structure.

9. The spacer profile (90; 110; 130; 200; 220) in accordance with any one of the preceding Claims, **characterized in that** the profile comprises a vapor barrier layer (102; 120; 140; 210; 228) and optionally an inert gas barrier layer adjacent to the first transverse wall (97; 117; 137; 207; 227), wherein the vapor barrier layer (102; 120; 140; 210; 228) and optionally an inert gas barrier layer preferably extends into the side walls (94, 95; 114, 115; 134, 135; 204, 205; 224, 225) abutting against the insulating glass panes, wherein, optionally, the vapor barrier layer and optionally an inert gas barrier layer is embedded into the profile body.

10. The spacer profile (14; 30; 40; 54; 80; 90; 110; 130; 150; 160; 180; 200; 220; 240; 260) in accordance with any one of the preceding Claims, **characterized in that** the profile is a solid profile, or alternatively the profile is a hollow profile with one or a plurality of hollow chambers (42, 43; 56, 57, 58, 59; 82; 92; 112; 132; 190; 202; 242; 262) extending continuously in the longitudinal direction and/or has a plurality of ducts (36; 50; 72; 88; 98; 118; 138; 164; 196; 208; 230; 248; 268) distributed over the cross section of the profile and extending continuously in the longitudinal direction, wherein, optionally, the hollow chamber or the hollow chambers in the second transverse wall has/have through-openings at regular intervals and/or the profile comprises one or a plurality of large volume chamber(s) which is/are surrounded by hollow chamber walls, and comprises a plurality of small volume ducts arranged distributed in the hollow chamber walls.

11. The spacer profile (150; 160; 180) in accordance with any one of the preceding Claims, **characterized in that** the profile is completely or partially encased by a plastics material or a metallic material and/or **in that** the binder matrix is selected from materials having coefficients of permeation for water vapor that are less than or equal to 500 g · µm/m² · d, wherein the binder matrix is preferably formed predominantly of polypropylene.

12. A spacer frame for insulating glass panes, produced using frame parts made from the spacer profile (14; 30; 40; 54; 80; 90; 110; 130; 150; 160; 180; 200; 220; 240; 260) in accordance with any one of Claims 1 to 11, wherein, optionally, the frame parts, when necessary, are cut to length from an endless profiled material and are connected to each other at the frame corners by means of welding or adhesion, wherein, further optionally, the frame parts are connected to each other at the frame corners by means of corner connector elements, wherein optionally the corner connector elements are connected to the frame parts by a material bond, a positive lock, and/or a force lock.

13. The spacer frame in accordance with Claim 12, **characterized in that** the corner regions of the frame are produced by means of bending, wherein the regions to be bent are heated before the bending operation and optionally also during the bending operation, in particular by means of the application of radiant heat, contact heat, hot air, induction, or resistance heat, and/or **in that** the outer surface of the profile forming the frame comprises guidance elements for accommodating corner and/or straight connectors, and/or **in that** the corner connector elements are produced of substantially the same material as the spacer profile (14; 30; 40; 54; 80; 90; 110; 130; 150; 160; 180; 200; 220; 240; 260) itself by injection molding, transfer molding, compression molding, or plunger molding.

14. A method for producing a spacer profile (14; 30; 40; 54; 80; 90; 110; 130; 150; 160; 180; 200; 220; 240; 260) in accordance with any one of Claims 1 to 11, **characterized in that** a composition comprising the binder that is permeable to water vapor, the particulate adsorbent for water vapor, and a processing agent is shaped to a profile, wherein the processing agent in particular is a wax, and then is completely or partially expelled out of the shaped profile.

15. The method for producing a spacer profile (14; 30; 40; 54; 80; 90; 110; 130; 150; 160; 180; 200; 220; 240; 260) in accordance with Claim 14, **characterized in that** the processing agent comprises a proportion in the total mass used for shaping the profile of up to 35% by weight.

16. The method in accordance with Claim 14 or 15, **characterized in that** following shaping of the profile, the binder is cross-linked, optionally accompanied by expulsion of the processing agent used and optionally combined with drying of the profile (14; 30; 40; 54; 80; 90; 110; 130; 150; 160; 180; 200; 220; 240; 260).

## Revendications

1. Profilé d'entretoise (14 ; 30 ; 40 ; 54 ; 80 ; 90 ; 110 ; 130 ; 150 ; 160 ; 180 ; 200 ; 220 ; 240 ; 260) pour vitrages isolants (10) avec une section transversale de profilé dérivée d'une forme rectangulaire, où lors de la formation des vitrages isolants (10) deux parois latérales distantes l'une de l'autre parallèlement (16, 17 ; 32, 33 ; 44, 45 ; 60, 61 ; 84, 85 ; 94, 95 ; 114, 115 ; 134, 135 ; 166, 167 ; 186, 187 ; 204, 205 ; 224, 225 ; 244, 245 ; 264, 265) du profilé reposent contre les vitres (11, 12) qui doivent être maintenues à distance, où une première et une seconde cloison transversale (20, 22 ; 34, 35 ; 48, 49 ; 62, 63 ; 86, 87 ; 96, 97 ; 116, 117 ; 136, 137 ; 154 ; 168, 172 ; 188 ; 194 ; 226, 206, 207 ; 226, 227 ; 246, 247 ; 266, 267) sont présentes, où la première cloison transversale (20 ; 34 ; 48 ; 62 ; 87 ; 97 ; 117 ; 137 ; 168 ; 188 ; 207 ; 227 ; 247 ; 267) est disposée au voisinage du bord de vitre et la seconde cloison transversale (22 ; 35 ; 49 ; 63 ; 86 ; 96 ; 116 ; 136 ; 154 ; 172 ; 194 ; 206 ; 226 ; 246 ; 266) est disposée en direction de l'interstice des vitres, où le profilé d'entretoise comprend une matrice de liant et un adsorbant particulaire pour la vapeur d'eau inclus dans la matrice du liant, la matrice de liant est perméable à la vapeur d'eau et le liant est expansé, **caractérisé en ce que** la proportion de l'adsorbant particulaire par rapport à la masse totale du profilé d'entretoise est de 30 à 65 % en poids.

2. Profilé d'entretoise (14 ; 30 ; 40 ; 54 ; 80 ; 90 ; 110 ; 130 ; 150 ; 160 ; 180 ; 200 ; 220 ; 240 ; 260) selon la revendication 1, **caractérisé en ce que** l'adsorbant particulaire est choisi parmi les gels de silice et/ou les aluminosilicates.

3. Profilé d'entretoise (14 ; 30 ; 40 ; 54 ; 80 ; 90 ; 110 ; 130 ; 150 ; 160 ; 180 ; 200 ; 220 ; 240 ; 260) selon la revendication 1 ou 2, **caractérisé en ce que** l'adsorbant particulaire présente une structure de micropores avec des tailles de pores dans le domaine de 2 à 25 angströms, de préférence encore dans le domaine de 2 à 10 angströms.

4. Profilé d'entretoise (14 ; 30 ; 40 ; 54 ; 80 ; 90 ; 110 ; 130 ; 150 ; 160 ; 180 ; 200 ; 220 ; 240 ; 260) selon l'une des revendications précédentes, **caractérisé en ce que** l'adsorbant particulaire est inclus sous forme de poudre dans la matrice, où de préférence l'adsorbant particulaire présente des particules avec une taille de particule de jusqu'à 6 mm.

5. Profilé d'entretoise (14 ; 30 ; 40 ; 54 ; 80 ; 90 ; 110 ; 130 ; 150 ; 160 ; 180 ; 200 ; 220 ; 240 ; 260) selon l'une des revendications précédentes, **caractérisé en ce que** la proportion de l'adsorbant particulaire par rapport à la masse totale du profilé d'entretoise est de 40 % en poids ou plus, de manière particulièrement préférée de 50 % en poids ou plus.

6. Profilé d'entretoise (14 ; 30 ; 40 ; 54 ; 80 ; 90 ; 110 ; 130 ; 150 ; 160 ; 180 ; 200 ; 220 ; 240 ; 260) selon l'une des revendications précédentes, **caractérisé en ce que** le profilé d'entretoise est un produit d'extrusion et/ou de pultrusion, où de préférence le liant est choisi parmi les liants organiques et/ou inorganiques, en particulier la méthylcellulose soluble dans l'eau, les matières synthétiques thermoplastiques, en particulier le polyamide ou le polypropylène, ou les composés de polysilicium.

7. Profilé d'entretoise (14 ; 30 ; 40 ; 54 ; 80 ; 90 ; 110 ; 130 ; 150 ; 160 ; 180 ; 200 ; 220 ; 240 ; 260) selon l'une des revendications précédentes, **caractérisé en ce que** des substances de charge et/ou de renforcement et/ou des pigments et/ou des stabilisants aux UV sont inclus dans la matrice de liant, où de préférence les substances de charge et/ou de renforcement et/ou les pigments sont choisis parmi les nanoparticules, les polymères cristallins liquides, les fibres de verre, de carbone, d'aramide, naturelles et/ou métalliques sous forme de fibres courtes, longues et/ou sans fin, le mica, le dioxyde de titane, la wollastonite ou les sphères creuses de verre.

8. Profilé d'entretoise (14 ; 30 ; 40 ; 54 ; 80 ; 90 ; 110 ; 130 ; 150 ; 160 ; 180 ; 200 ; 220 ; 240 ; 260) selon l'une des revendications précédentes, **caractérisé en ce que** le liant expansé présente une structure de mousse à pores ouverts.

9. Profilé d'entretoise (90 ; 110 ; 130 ; 200 ; 220) selon l'une des revendications précédentes, **caractérisé en ce que** le profilé comprend au voisinage de la première cloison transversale (97 ; 117 ; 137 ; 207 ; 227) une couche de barrière contre la vapeur (102 ; 120 ; 140 ; 210 ; 228) et éventuellement une couche de barrière contre les gaz nobles, où de préférence la couche de barrière contre la vapeur (102 ; 120 ; 140 ; 210 ; 228) et éventuellement une couche de barrière contre les gaz nobles s'étendent jusque dans les parois latérales (94, 95 ; 114, 115 ; 134, 135 ; 204, 205 ; 224, 225) qui reposent contre les vitrages isolants, où éventuellement la couche de barrière contre la vapeur et éventuellement une couche de barrière contre les gaz nobles sont insérées dans le corps de profilé.

10. Profilé d'entretoise (14 ; 30 ; 40 ; 54 ; 80 ; 90 ; 110 ; 130 ; 150 ; 160 ; 180 ; 200 ; 220 ; 240 ; 260) selon l'une des revendications précédentes, **caractérisé en ce que** le profilé est un profilé massif, ou à titre d'alternative le profilé est un profilé creux avec une ou plusieurs chambres creuses (42, 43 ; 56, 57, 58, 59 ; 82 ; 92 ; 112 ; 132 ; 190 ; 202 ; 242 ; 262) qui s'étendent de manière continue dans la direction longitudinale et/ou présente une multiplicité de canaux (36 ; 50 ; 72 ; 88 ; 98 ; 118 ; 138 ; 164 ; 196 ; 208 ; 230 ; 248 ; 268) répartis sur la section transversale du profilé, qui s'étendent de manière continue dans la direction longitudinale, où éventuellement la chambre creuse ou les chambres creuses présente/présentent dans la seconde cloison transversale des ouvertures de passage à intervalles réguliers et/ou le profilé comprend une ou plusieurs chambres de grand volume, qui est/sont entourées par des cloisons des chambres creuses, ainsi qu'une multiplicité de canaux de petit volume disposés en étant répartis dans les cloisons des chambres creuses.

11. Profilé d'entretoise (150 ; 160 ; 180) selon l'une des revendications précédentes, **caractérisé en ce que** le profilé est revêtu en totalité ou en partie par un matériau de type matière synthétique ou un matériau métallique et/ou **en ce que** la matrice de liant est choisi parmi un matériau avec un coefficient de perméation pour la vapeur d'eau inférieur ou égal à 500·g·µm/m^{2·}d, où de préférence la matrice de liant est formée principalement de polypropylène.

12. Cadre d'entretoise pour vitrages isolants, fabriqué en utilisant des parties de cadre produites à partir du profilé d'entretoise (14 ; 30 ; 40 ; 54 ; 80 ; 90 ; 110 ; 130 ; 150 ; 160 ; 180 ; 200 ; 220 ; 240 ; 260) selon l'une des revendications 1 à 11, où éventuellement les parties de cadre sont selon les besoins coupées à longueur dans un matériau de profilé sans fin et sont reliées entre elles au niveau des angles du cadre par soudure ou collage, où éventuellement encore les parties de cadre sont reliées au niveau des angles du cadre au moyen d'éléments de liaison d'angle, où éventuellement les éléments de liaison d'angle sont reliés avec les parties de cadre par assemblage de substance, de forme et/ou de force.

13. Cadre d'entretoise selon la revendication 12, **caractérisé en ce que** les domaines d'angle du cadre sont fabriqués par pliage, où les domaines à plier sont chauffés avant le processus de pliage et éventuellement aussi pendant le processus de pliage, en particulier en utilisant de la chaleur de rayonnement, de la chaleur de contact, de l'air chaud, l'induction ou de la chaleur de résistance et/ou **en ce que** la surface externe du profilé formant le cadre comprend des éléments de guidage pour recevoir des liaisons d'angle et/ou longitudinales et/ou **en ce que** les éléments de liaison d'angle sont fabriqués par moulage par injection, moulage par transfert, moulage par compression, moulage à la presse à piston sensiblement à partir du même matériau que le profilé d'entretoise (14 ; 30 ; 40 ; 54 ; 80 ; 90 ; 110 ; 130 ; 150 ; 160 ; 180 ; 200 ; 220 ; 240 ; 260) lui-même.

14. Procédé de fabrication d'un profilé d'entretoise (14 ; 30 ; 40 ; 54 ; 80 ; 90 ; 110 ; 130 ; 150 ; 160 ; 180 ; 200 ; 220 ; 240 ; 260) selon l'une quelconque des revendications 1 à 11, **caractérisé en ce qu'**une masse, comprenant le liant perméable à la vapeur d'eau, l'adsorbant particulaire pour la vapeur d'eau et un agent de façonnage, est mise sous forme d'un profilé, où l'auxiliaire de façonnage est en particulier une cire, puis est expulsé en totalité ou en partie du profilé mis en forme.

15. Procédé de fabrication d'un profilé d'entretoise (14 ; 30 ; 40 ; 54 ; 80 ; 90 ; 110 ; 130 ; 150 ; 160 ; 180 ; 200 ; 220 ; 240 ; 260) selon la revendication 14, **caractérisé en ce que** l'auxiliaire de façonnage comprend une proportion par rapport à la masse totale, qui est utilisée pour la mise en forme du profilé, de jusqu'à 35 % en poids.

16. Procédé selon la revendication 14 ou 15, **caractérisé en ce que**, après le formage du profilé, le liant est réticulé, éventuellement accompagné par une expulsion des auxiliaires de façonnage utilisés et éventuellement combiné avec un séchage du profilé (14 ; 30 ; 40 ; 54 ; 80 ; 90 ; 110 ; 130 ; 150 ; 160 ; 180 ; 200 ; 220 ; 240 ; 260).
